# EUROPÄISCHE PATENTANMELDUNG

(11) **EP 2 045 581 A2**
(43) Veröffentlichungstag der Anmeldung: **08.04.2009**
(21) Anmeldenummer: 08016830.5
(22) Anmeldetag: 25.09.2008
(51) Int. Cl.: G01F 1/56

(54) **Verfahren und Anordnung zur Messung des Durchflusses elektrisch leitfähiger Medien**

(30) Priorität: 28.09.2007 DE 102007046881
(71) Anmelder: Forschungszentrum Dresden - Rossendorf e.V., 01328 Dresden (DE)
(72) Erfinder: Gerbeth, Gunter, Dr., 01328 Dresden (DE); Buchenau, Dominique, 99817 Eisenach (DE); Priede, Janis, Dr., Coventry CV3 1AD (GB); Bojaevics, Andris, Dr., 1050 Riga (LV); Bucenieks, Imants, Dr., 2169 Slaspils (LV); Gelfgats, Jurijs, Prof. Dr., 2010 Jurmala (LV)

(57) **Zusammenfassung**

Die Erfindung betriftt ein Verfahren und eine Anordnung zur kontaktlosen Messung des Durchflusses elektrisch leitfähiger Medien durch Strömungskanäle. Durch die Erfindung soll eine Durchflussmessung ohne mechanischen oder elektrischen Kontakt zum fließenden Medium ermöglicht werden, ohne die zu messende Strömung zu beeinflussen und die unabhängig von möglichen Temperaturänderungen des fließenden Mediums eine direkte Durchflussmessung erlaubt. Erreicht wird das durch Anordnen eines am Strömungskanal drehbaren einfach polarisierten Magnetfeldes eines Magneten (4), derart, dass die Strömung im Strömungskanal (1) ein Drehmoment auf das Magnetfeld des Magneten (4) ausübt, das proportional zum Produkt aus der elektrischen Leitfähigkeit des strömenden Mediums und dessen mittlerer Geschwindigkeit ist und das den Magneten (4) in Drehung versetzt, derart, dass ein Drehmoment auf das strömende Medium im Strömungskanal (1) ausgeübt wird, welches proportional zur elektrischen Leitfähigkeit des strömenden Mediums und zur Drehzahl des sich drehenden Magneten (4) ist und nachfolgende Messung der Drehzahl des einfach polarisierten Magnetfeldes im weitgehend drehmomentlosen Zustand.

## Beschreibung

Die Erfindung betrifft ein Verfahren und eine Anordnung zur kontaktlosen Messung des Durchflusses elektrisch leitfähiger Medien durch Strömungskanäle.

Durchflussmesser für strömende Medien zeichnen sich dadurch aus, dass sie in der Lage sind, ein Messsignal zu liefern, welches proportional zu der über einen Querschnitt gemittelten Geschwindigkeit ist. Sie gelangen dort zum Einsatz, wo es darauf ankommt, das pro Zeiteinheit fließende Volumen zu ermitteln. Weit verbreitete Anwendungsgebiete sind z.B. die Bestimmung des Wasserverbrauchs von Haushalten, die Ermittlung von getankten Kraftstoffmengen oder die Messung des Durchflusses von Substanzen in der chemischen Industrie. Dazu werden häufig Turbinendurchflussmesser, Wirbeldurchflussmesser oder auch induktive Durchflussmesser verwendet.

Die häufig verwendete Version induktiver Durchflussmesser arbeitet mit Elektroden, die im unmittelbaren Kontakt mit dem fließenden Medium stehen müssen. Für Anwendungen bei Strömungen flüssiger Metalle bei höheren Temperaturen stellt dies eine entscheidende Einschränkung dar. Wünschenswert sind Lösungen, die es erlauben, den Durchfluss in völlig kontaktloser Art und Weise zu ermitteln.

Ein bekannter Lösungsansatz dafür besteht in der mechanischen Wirkung der Strömung auf eine von außen angelegte Magnetfeldquelle. Wird die Strömung einem externen Magnetfeld ausgesetzt, so wirkt i.a. auf die Strömung eine der Strömungsgeschwindigkeit proportionale, induzierte elektromagnetische Kraft. Gemäß dem Newtonschen Prinzip wirkt die gleiche Kraft aber auch auf die Quelle des externen Magnetfeldes, z.B. die ein Magnetfeld erzeugende Spule oder einen bzw. mehrere Permanentmagnete. Wird diese Rückwirkung auf die Magnetfeldquelle nun durch geeignete Kraft- oder Drehmomentenmessung bestimmt, kann daraus auf die Strömung geschlossen werden.

Dieses Grundprinzip der kontaktlosen Durchflussmessung elektrisch leitfähiger Flüssigkeiten ist in dem Buch (J.A. Shercliff, The Theory of Electromagnetic Flow-Measurement, Cambridge University Press, 1962) beschrieben. Eine Ausführungsform besteht in einer Anordnung von Permanentmagneten auf einem Drehteller, der bei geeigneter Platzierung relativ zum Strömungskanal durch die Strömung in Rotation versetzt wird. Die Idee eines solchen magnetischen Flügelrades geht aus der GB 831226 hervor.

Weitere Ausführungsvarianten der Drehmomentmessung sind in dem Buch (V.E. Zirkunov, B.D. Scheigur, G.J. Sermons, R.K. Kalnins, Kontaktlose Kontrolle von Flüssigmetallströmungen (in russ.), Riga, Zinatne, 1973, Seiten 49-51) und in der Publikation (I. Bucenieks: Electromagnetic induction flow-meter on permanent magnets, 5th Int. PAMIR conference on Fundamental and Applied MHD, Ramatuelle (France), Sept. 16-20, 2002, Proceedings S. II 103-105) beschrieben.

Die JP 57199917 A beschreibt eine Lösung für die Durchflussmessung auf der Basis einer Kraftmessung auf eine die Strömung umschließende Magnetfeldspule. Verschiedene Varianten der Messung der auf die Magnetfeldquelle wirkenden Kraft oder Drehmomente, einschließlich des magnetischen Flügelrades, sind in der DE 10 2005 046 910 A1 und der WO 2007/033982 enthalten. Allen diesen strömungsbedingten Kraft bzw. Drehmomentmessungen ist gemeinsam, dass die zu messende Kraft- oder Drehmomentwirkung proportional sowohl zur elektrischen Leitfähigkeit als auch zum Quadrat des angelegten Magnetfeldes ist.

Die Messung liefert folglich nicht unmittelbar den Durchfluss, sondern das Produkt aus mittlerer Strömungsgeschwindigkeit und der elektrischen Leitfähigkeit der Flüssigkeit. Die Bestimmung des Durchflusses erfordert deshalb die Kenntnis der elektrischen Leitfähigkeit des strömenden Mediums. Da die elektrische Leitfähigkeit teils sogar relativ stark von der Temperatur abhängt, sind bei Strömungen mit Temperaturänderungen also eine begleitende Temperaturmessung und die Kenntnis der elektrischen Leitfähigkeit als Funktion der Temperatur unbedingt erforderlich. Die quadratische Abhängigkeit vom angelegten Magnetfeld kann in Abhängigkeit von der Strömung dazu führen, dass für ein sinnvolles Messsignal relativ starke Magnetfelder angelegt werden müssen. Das jedoch ist problematisch, da das Messsystem dann natürlich die zu messende Strömung verändert.

Die Aufgabe der vorliegenden Erfindung besteht nun darin, eine Durchflussmessung ohne mechanischen oder elektrischen Kontakt zum fließenden Medium zu ermöglichen, sowie ohne die zu messende Strömung zu beeinflussen oder zu verändern, und die unabhängig von möglichen Temperaturänderungen des fließenden Mediums eine direkte Durchflussmessung erlaubt.

Erfindungsgemäß wird die Aufgabe mit den in den unabhängigen Patentansprüchen dargelegten Merkmalen gelöst. Weitere Ausgestaltungen der Erfindung gehen aus den jeweils zugehörigen Unteransprüchen hervor.

Die Erfindung basiert auf der grundlegenden Erkenntnis, dass sich ein weitgehend kraft- bzw. drehmomentloser Zustand ergibt, wenn sich eine Magnetfeldquelle frei entlang eines Strömungskanals bewegt oder, bei entsprechender Positionierung am Strömungskanal, sich frei um eine Achse drehen kann. Der sich dabei einstellende stationäre Zustand der Magnetfeldquelle ist weitgehend kraft- bzw. drehmomentfrei, das heißt es wird primär keine Kraft und auch kein Drehmoment gemessen. Es wird lediglich der stationäre Bewegungszustand der Magnetfeldquelle gemessen, der weitgehend proportional zum zu messenden Durchfluss ist. Der kraft- und drehmomentlose Zustand der Magnetfeldquelle ist der entscheidende Unterschied zum Stand der Technik, nach dem explizit mit einer Kraft- oder Drehmomentmessung gearbeitet wird.

Außerdem ist im Gegensatz zu den im eingangs zitierten Stand der Technik beschriebenen magnetischen Flügelrädern nur ein einziger, drehbar gelagerter Magnet erforderlich. Dies stellt konzeptionell und hinsichtlich der technischen Realisierung eine wesentliche Vereinfachung dar. Dabei ist zu beachten, dass alle in den zum Stand der Technik zitierten Veröffentlichungen aufgeführten Ausführungsformen der magnetischen Flügelräder mit einem einzigen Permanentmagneten gar nicht arbeiten würden.

Die Erfindung wird nachfolgend an je einem Ausführungsbeispiel für das Verfahren und die Anordnung näher erläutert. In den zugehörigen Zeichnungen zeigen:
- Fig. 1:: eine schematische dreidimensionale Darstellung einer Ausführungsform einer Anordnung zur Messung des Durchflusses einer in einem Kanal strömenden Flüssigkeit;
- Fig. 2:: eine schematische Stirnansicht nach Fig. 1;
- Fig. 3:: ein Diagramm, veranschaulichend die gemessene Drehzahl des sich drehenden Magneten als Funktion der Strömungsgeschwindigkeit im Kanal; und
- Fig. 4:: die Anordnung nach Fig. 1 als Draufsicht, bei der über den drehbar gelagerten Magneten zwei Helmholtz- Spulenpaare angeordnet sind.

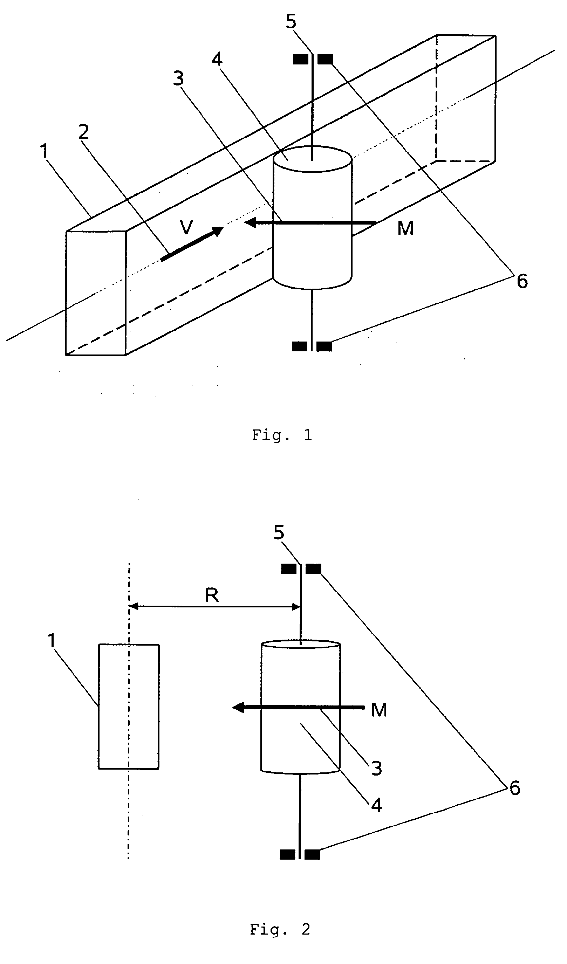

Fig. 1 zeigt eine Ausführungsform der Anordnung zur Messung des Durchflusses der in einem Strömungskanal (1) strömenden Flüssigkeit. Die Anordnung besteht aus einem als Permanentmagnet ausgebildeten Magneten (4), der bevorzugt als Zylindermagnet ausgebildet ist und der in einer Drehachse (5) neben dem Strömungskanal (1) gelagert ist. In diesem Beispiel sind die drei Richtungen der mittleren Strömung (2) im Kanal, der Drehachse (5) des Magneten (4) und der Magnetisierung (3) des Magneten alle jeweils senkrecht zueinander. Bei dieser Geometrie stellt sich die maximal mögliche durch die Strömung im Strömungskanal (1) bedingte Drehrate des Magneten (4) ein.

Für das Funktionieren dieses Wirkungsprinzips ist es ausreichend, dass von den drei genannten Richtungen keine parallel zu einer der anderen beiden ist. Die Lagerung (6) der Magnetachse erfolgt nach dem Stand der Technik bekannten mechanischen oder elektromagnetischen Methoden.

Bei diesem Messverfahren erzeugt die Strömung der Flüssigkeit im Strömungskanal (1) einerseits ein Drehmomcnt auf den Magneten (4), das proportional zum Produkt aus der elektrischen Leitfähigkeit des strömenden Mediums und der mittleren Geschwindigkeit ist. Der sich drehende Magnet (4) wiederum erzeugt ein Drehmoment, das der Magnet (4) auf die Strömung im Strömungskanal (1) ausübt, und das proportional zur elektrischen Leitfähigkeit des strömenden Mediums und zur Drehzahl des sich drehenden Magneten (4) ist. Die sich einstellende Drehzahl des Magneten (4) entspricht dann einem weitgehend drehmomentlosen Zustand, der durch die Gleichheit der beiden genannten Drehmomente charakterisiert ist, wobei die elektrische Leitfähigkeit der Flüssigkeit keinen direkten Einfluss mehr auf die sich einstellende Drehzahl des Magneten (4) hat.

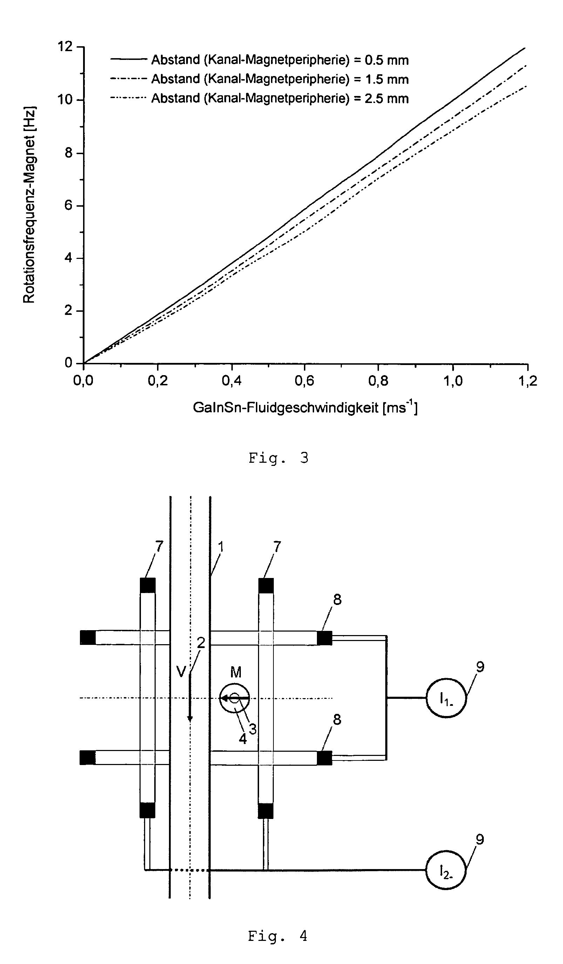

Wie aus Fig. 3 hervorgeht, ist die Drehzahl des weitgehend drehmomentlos rotierenden Magneten (4) direkt proportional der mittleren Strömung im Strömungskanal (1). Der Proportionalitätsfaktor hängt nur noch von der Geometrie der Anordnung, das heißt dem Abstand R der Magnetachse vom Strömungskanal (1), der Größe des Magneten (4) und den Abmessungen des Strömungskanals (1) ab (Fig. 2).

Der weitgehend drehmomentfreie Zustand des Magneten (4) bedeutet aber auch, dass die Strömung durch die Messung nicht beeinflusst wird. Das Messverfahren ist damit weitgehend störungsfrei.

Am Messort vorhandene magnetische Störfelder, wie z.B. auch das Erdmagnetfeld, können je nach Größe und Richtung die Messung beeinflussen. Derartige Fremdfelder können durch eine Anordnung von Helmholtz-Spulenpaaren (7), (8) über dem sich drehenden Permanentmagneten (4) weitgehend kompensiert werden, wodurch sich die Empfindlichkeit der Messanordnung erhöht (Fig. 4).

Die Drehrate des sich drehenden Magneten (4) wird durch eine optische, mechanische oder elektromagnetische Messung bestimmt. Nach dem Stand der Technik sind dafür mehrere Messmethoden bekannt, wie z.B. die Frequenz oder Periodendauermessung. Vorteilhaft für diese Messung sind kontaktlos arbeitende optische oder magnetische Messverfahren.

Die beschriebene Durchflussmessung erfolgt völlig kontaktlos und es sind keinerlei Einbauten in Strömungskanal erforderlich. Die Vorteile des kontaktlosen Durchflussmessers gegenüber herkömmlichen kommerziellen Durchflussmessern liegen vor allem in der vorteilhaften Einsetzbarkeit bei hohen Temperaturen, der weitgehenden Proportionalität des Messsignals Drehzahl des Magneten (4) zum Durchfluss und dem einfachen mechanischen Aufbau.

Ein weiterer Hauptvorteil besteht in der Tatsache, dass der Durchflussmesser nicht in ein Leitungssystem eingebaut werden muss, sondern aufgrund seiner völlig separaten Ausführung auch nachträglich ohne Unterbrechung der Strömung im Strömungskanal (1) am Messort angebracht werden kann. Die Abwesenheit von elektrischen Kontakten zum Fließmedium und von bewegten Teilen verhindert Verschleißerscheinungen. Der Einsatzbereich erstreckt sich auf sämtliche elektrisch leitfähigen Medien, wobei seine Vorteile gegenüber herkömmlichen Durchflussmessern am stärksten bei flüssigen Metallen zur Geltung gelangen können.

Fig. 2 zeigt einen zylindcrförmigen NdFeB-Magneten (4), der in einer Lagerung (6) um eine vertikale Achse (5) drehbar gelagert ist und der in horizontaler Richtung homogen magnetisiert ist mit einer Magnetfeldinduktion von 0.6 T an der Oberfläche. Der zylinderförmige Magnet (4) hat eine Höhe von 32 mm und einen Durchmesser von 24 mm. Dieser drehbare Magnet (4) ist im Abstand von R = 28.5 mm vom Strömungskanal (1) angeordnet. In diesem Strömungskanal (1) fließt eine metallische Schmelze GaInSn, deren Eigenschaften bekannt sind und deren Strömungsgeschwindigkeit mit anderen Messverfahren genau bestimmt wird. Die gemessene Drehzahl des sich drehenden Magneten (4) als Funktion der Strömungsgeschwindigkeit im Strömungskanal (1) zeigt Fig. 3. Es besteht eine ausgezeichnete Linearität zwischen der Drehzahl des Magneten und der mittleren Strömungsgeschwindigkeit der Schmelze im Strömungskanal 1.

Eine weitere Anordnung zur Realisierung des Messverfahrens zeigt Fig. 4. Dabei sind über dem drehbar gelagerten Magneten (4) zwei Helmholtz-Spulenpaare (7), (8) angeordnet, um Fremdfelder in der Umgebung des Messortes zu kompensieren. Die Helmholtz-Spulenpaare (7), (8) sind jeweils mit einer Konstantstromquelle (9) verbunden. Der Kompensationsvorgang ist dabei folgendermaßen durchzuführen. Das Sensorsystem wird am Messort fixiert, das elektrisch leitfähige Medium im Strömungskanal (1) ruht, und die Konstantstromquellen (9) für die beiden Helmholtz-Spulenpaare (7), (8) sind stromlos geschaltet. Der drehbar gelagerte Magnet (4), hier ein Zylindermagnet, wird sich unter diesen Bedingungen auf das am Messort bereits existierende Magnetfeld, z.B. das dort vorhandene Erdmagnetfeld, ausrichten. Danach wird ein Strom in eines der beiden Helmholtz-Spulenpaare (7), (8) eingespeist und solange erhöht, bis sich der Zylindermagnet mit seinem Dipolmoment parallel zur Spulenpaarachse einstellt. Im folgenden Schritt wird die Stromstärke im zweiten Helmholtz-Spulenpaar (8), (7) solange erhöht, bis das Dipolmoment des Zylindermagneten einen Winkel von jeweils 45 Grad mit den Spulenachsen beider Helmholtz-Anordnungen (7), (8) bildet. Der Messaufbau ist somit gegenüber stationären magnetischen Fremdeinwirkungen in der Rotationsebene kompensiert.

### Bezugszeichenliste

- 1: Strömungskanal
- 2: Richtung der mittleren Strömung im Kanal
- 3: Magnetisierungsrichtung
- 4: Permanentmagnet
- 5: Drehachse des Magneten
- 6: Lagerung der Drehachse des Magneten
- 7: Helmholtz-Spulenpaar (1)
- 8: Helmholtz-Spulenpaar (2)
- 9: Konstantstromquelle

## Patentansprüche

1. Verfahren zur kontaktlosen Messung des Durchflusses elektrisch leitfähiger medien durch einen Strömungskanal,
**gekennzeichnet durch**
a. Anordnen eines am Strömungskanal drehbaren einfach polarisierten Magnetfeldes eines Magneten, derart,
i. dass die Strömung des Mediums ein Drehmoment auf das Magnetfeld ausübt, das proportional zum Produkt aus der elektrischen Leitfähigkeit des strömenden Mediums und dessen mittlerer Geschwindigkeit ist und das Magnetfeld in Drehung versetzt, derart,
ii. dass ein Drehmoment auf das strömende Medium ausgeübt wird, welches proportional zur elektrischen Leitfähigkeit des strömenden Mediums und zur Drehzahl des sich drehenden Magneten ist, und
b. nachfolgende Messung der Drehzahl des einfach polarisierten Magnetfeldes.

2. Verfahren nach Anspruch 1, **dadurch gekennzeichnet, dass** die Drehrate des sich drehenden Magneten durch eine optische, mechanische oder elektromagnetische Messung bestimmt wird.

3. Verfahren nach Anspruch 1 und 2, **dadurch gekennzeichnet, dass** am Messort befindliche störende Fremdfelder, einschließlich des Erdmagnetfeldes kompensiert werden.

4. Verfahren nach Anspruch 3, **dadurch gekennzeichnet, dass** störende Fremdfelder mit zwei Helmholtz-Spulenpaaren kompensiert werden.

5. Verfahren nach Anspruch 4, **dadurch gekennzeichnet, dass** das bei ruhendem Medium im Strömungskanal die Helmholtz-Spulenpaare stromlos geschaltet werden, bis sich der drehbare Magnet auf das am Messort vorhandene Magnetfeld ausrichtet,
a. dass danach ein Strom in eine der beiden Helmholtz-Spulenpaare eingespeist und solange erhöht wird, bis sich der Magnet mit seinem Dipolmoment parallel zur Spulenpaarachse einstellt,
b. dass anschließend ein Strom in das zweite Helmholtz-Spulenpaar eingespeist und solange erhöht wird, bis sich der Dipol des Magneten einen Winkel von jeweils 45 Grad mit den Spulenachsen beider Helmholtz-Spulenpaare bildet.

6. Anordnung zur kontaktlosen Messung des Durchflusses elektrisch leitfähiger Medien durch einen Strömungskanal, **dadurch gekennzeichnet, dass** ein Permanentmagnet (4) mit weitgehend homogener Magnetisierung in einer Richtung neben dem Strömungskanal (1) drehbar angeordnet ist, derart, dass keine der drei Richtungen, Richtung des Strömungskanals (1), Ausrichtung der Drehachse (5) des Magneten (4) und Richtung der Magnetisierung (3) des Magneten (4) parallel zu einer anderen der drei Richtungen verläuft.

7. Anordnung nach Anspruch 6, **dadurch gekennzeichnet, dass** die drei Richtungen, Richtung des Strömungskanales (1), Ausrichtung der Drehachse (5) des Magneten (4) und Magnetisierung (3) des Magneten (4), jeweils senkrecht aufeinander stehen

8. Anordnung nach Anspruch 6 und (7), **dadurch gekennzeichnet, dass** der Magnet (4) ein quer zur Drehachse (5) homogen magnetisierter Permanentmagnet ist.

9. Anordnung nach Anspruch 8, **dadurch gekennzeichnet, dass** der Magnet (4) als Zylindermagnet ausgebildet ist, dessen Symmetrieachse mit der Drehachse (5) übereinstimmt.

10. Anordnung nach Anspruch 9, **dadurch gekennzeichnet, dass** der Zylindermagnet auf einer Stirnfläche und/oder seinem Umfang optische Markierungen zur Abtastung durch ein optisches System aufweist.

11. Anordnung nach einen der Ansprüche 6 bis 10, **dadurch gekennzeichnet, dass** sich über oder unter dem Magneten (4). zwei Helmholtz-Spulenpaare (7, 8) befinden.

12. Anordnung nach Anspruch 11, **dadurch gekennzeichnet, dass** die Spulen jedes Helmholtz-Spulenpaares (7, 8) jeweils mit einer Konstantstromquelle (9) verbunden sind.

13. Anordnung nach Anspruch 12, **dadurch gekennzeichnet, dass** der Strom der Konstantstromquellen (9) einstellbar ist.
